Europäisches Patentamt

European Patent Office

Office européen des brevets

(19)

(11) Veröffentlichungsnummer : **0 193 568**
**B1**

(12) **EUROPÄISCHE PATENTSCHRIFT**

(45) Veröffentlichungstag der Patentschrift :
28.09.88

(21) Anmeldenummer : 85904421.6

(22) Anmeldetag : 29.08.85

(86) Internationale Anmeldenummer :
PCT/DE 85/00296

(87) Internationale Veröffentlichungsnummer :
WO/8601373 (13.03.86 Gazette 86/06)

(51) Int. Cl.⁴ : **A 01 F 15/00**

(54) FAHRBARE GROSSBALLENPRESSE FÜR LANDWIRTSCHAFTLICHES ERNTEGUT.

(30) Priorität : **01.09.84 DE 3432265**

(43) Veröffentlichungstag der Anmeldung :
**10.09.86 Patentblatt 86/37**

(45) Bekanntmachung des Hinweises auf die Patenterteilung : **28.09.88 Patentblatt 88/39**

(84) Benannte Vertragsstaaten :
**FR GB**

(56) Entgegenhaltungen :
**GB-A- 2 150 492**
**US-A- 4 345 421**

(73) Patentinhaber : **FIRMA CLAAS OHG**
**Münsterstrasse 33**
**D-4834 Harsewinkel (DE)**

(72) Erfinder : **TERTILT, Werner**
**Abt-Bernhard-Strasse 6**
**D-4834 Harsewinkel 2 (DE)**

(74) Vertreter : **Patentanwälte Dipl.-Ing. Bodo Thielking**
**Dipl.-Ing. Otto Elbertzhagen**
**Gadderbaumer Strasse 20**
**D-4800 Bielefeld 1 (DE)**

Jouve, 18, rue St-Denis, 75001 Paris, France

## Beschreibung

Die Erfindung betrifft eine Rundballenpresse zur Herstellung von Großballen aus landwirtschaftlichem Erntegut, deren aus zwei Preßraumhälften bestehender aufklappbarer Preßraum umfangsseitig durch Preß- und Förderwalzen begrenzt sind, die in den den Preßraum stirnseitig begrenzenden Gehäusewänden antreibbar gelagert sind, wobei zwei benachbarte Preßwalzen einen sich über die Maschinenbreite erstreckenden Gutzuführspalt freilassen und wobei Drehachsen von Preß- und Förderwalzen auf einem Kreis gelagert sind, dessen Zentrum die theoretische Rotationsachse des Preßraums ist.

Bei derartigen bekannten Rundballenpressen (DE-A-2 602 231) wird immer wieder beobachtet, daß der zu bildende Großballen nach anfänglichem Drehen stehenbleibt, insbesondere dann, wenn es sich bei dem aufzuwickelnden Gut um brüchiges Stroh, beispielsweise Maisstroh handelt. Folglich kann einerseits kein weiteres Gut mehr zugeführt werden und andererseits kann der bereits ganz oder teilweise gebildete Ballen nicht mit Bindegarn umwickelt werden. Der Schlepperfahrer muß deshalb anhalten, die Presse öffnen und das im Preßraum befindliche brüchige Stroh herausziehen. Ein solcher Zwangsstopp führt zu erheblichen Zeitverlusten.

Ein weiterer Nachteil der bekannten Rundballenpressen dieser Art liegt darin, daß sich bei einem aus kurzem Halmgut bestehenden Ballen im Bereich des Einzugsspaltes Gut löst und nach unten fällt. Bei Pressen, bei denen der Zwischenraum zwischen der sogenannten Pickup-Trommel zu der den Einzugsspalt nach unten begrenzenden Preßwalze durch ein gerades Überleitblech überbrückt ist, fällt dieses Gut dann auf das Blech und bleibt dort liegen, wenn die Pickup-Trommel für kurze Zeit kein weiteres Gut fördert. Setzt die Gutzufuhr dann wieder ein, staut sich das Material häufig vor dem Einzugsspalt.

Es ist auch bereits eine Großballenpresse (US-A-4,345,421) bekannt, deren Preßraumquerschnitt nicht eine im wesentlichen runde sondern elliptische Querschnittsform aufweist, deren größere Halbachse vertikal angeordnet ist. Die lediglich aus einer Druckschrift bekannte Lösung soll dazu dienen, einen Ballen mit höherer Festigkeit zu schaffen. Tatsächlich erweist sich die bekannte Konstruktion nicht als funktionsfähig, denn zur Bildung eines festen runden Ballens müssen ständig erhebliche Kräfte von den Walzen am Umfang des Ballens auf diesen übertragen werden. Dies ist aber nicht möglich durch Walzen, die mit dem Ballen keine Berührung haben können, wie sie in der bekannten Druckschrift vorgesehen sind.

Der vorliegenden Erfindung liegt daher das Problem zugrunde, eine Rundballenpresse der eingangs näher bezeichneten Art derart auszubilden, daß die an sie zu stellenden Anforderungen im Hinblick auf eine einwandfreie Ballenbildung, auch bei brüchigem Halmgut, in zufriedenstellender Weise erfüllt werden. Das wird erfindungsgemäß dadurch erreicht, daß die zum Preßraum hin gerichteten Mantelflächenbereiche der — in Ballendrehrichtung gesehen — vor dem Guteinführspalt gelegenen Preßwalzen einen geringeren Abstand zur theoretischen Rotationsachse des Preßraums aufweisen als die Mantelflächen der übrigen Förderelemente. Hierdurch wird eine bereichsweise Verengung des Preßraums erreicht, wodurch der Ballen partiell vor dem Gutzulauf stärker verdichtet wird. Weitere Vorschläge nach der Erfindung sind in den Unteransprüchen behandelt.

Im folgenden wird die Erfindung anhand eines Ausführungsbeispiels und einer einzigen, dieses näher erläuternden Figur dargestellt.

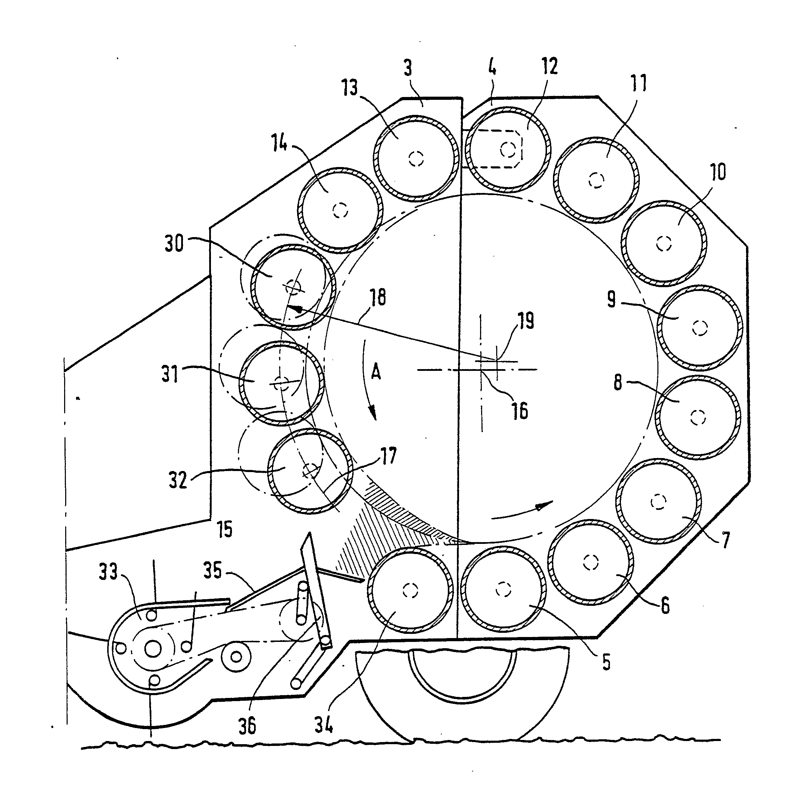

Die Figur zeigt einen schematischen Längsschnitt durch den funktionswesentlichen hinteren Bereich einer bevorzugten Ausführungsform einer Großballenpresse.

Dabei ist mit 1 der Rahmen der Großballenpresse bezeichnet, der auf Rädern verfahrbar ist.

Auf dem Rahmen 1 sind Seitenwände aufgesetzt, die zweigeteilt sind. An dem mit dem Rahmen 1 fest verbundenen Teil 3 der Seitenwände ist das Gehäuse 4 schwenkbar angelenkt. Mit den Ziffern 5 bis 12 sind die in dem schwenkbaren Gehäuseteil 4 gelagerten und angetriebenen Preßwalzen bezeichnet, die mit ihren Drehachsen auf einem gemeinsamen Radius — von der theoretischen Preßraumrotationsachse 16 ausgehend — gelagert sind. Auch die Preßwalzen 13, 14 des rahmenfesten Gehäuseteils 3 liegen auf dem vorgenannten Radius. Um nun zu gewährleisten, daß der Ballen in dem Preßraum, selbst wenn er aus glattem brüchigen Stroh besteht, ständig gedreht wird, weisen die in Drehrichtung A des Ballens vor dem Guteinführspalt 15 angeordneten Preßwalzen 30, 31, 32 einen zunehmend geringeren Abstand zur theoretischen Rotationsachse 16 des Ballens auf. Wie aus der einzigen Figur zu erkennen ist, liegen die Preßwalzen 30 bis 32 dabei auf einem gemeinsamen Kreisbogen 17 mit dem Radius 18, dessen Mittelpunkt 19 oberhalb und seitlich versetzt zu der Rotationsachse 16 des Preßraumes angeordnet ist, woraus sich ergibt, daß die Preßwalze 32 den geringsten Abstand zur Achse 16 des Preßraums aufweist. Im Bereich der Walzen 30 bis 32 zieht sich also der Preßraum in Ballendrehrichtung A betrachtet spiralförmig zu, wodurch der Ballen in diesem Bereich eine erhöhte Kompression erfährt. Das bewirkt, und dies haben ausführliche Versuche bewiesen, eine ständige Rotation des Ballens selbst unter ungünstigen Ernte- und/oder Materialbedingungen, sowie einen guten Zusammenhalt des Ballens auch bei extrem trockenem und kurzem Preßgut. Wenn nun aber der von der Pickup-Trommel 33 zugeführte Gutstrom dünner wird oder zeitweise gar nicht vorhanden ist, wurde beobachtet, daß der Ballen bereichsweise ausbricht, und zwar im Bereich des Einzugsspaltes 15. Das ausbrechende Material fällt dann auf das den Zwischenraum zwischen der Pickup-Trommel 33 und der den Einzugsspalt bodenseitig begrenzenden Preßwalze 34 überbrückende Überleitblech 35, welches mit Durchtrittsschlitzen für die Förderzinken 36 versehen ist. Da das Überleitblech 35 derart nach unten abgeknickt ist, daß sein der Walze 34 zugewandter Teil in seiner gedachten Verlängerung die Drehachse der Walze 34 trifft, gelangt das Gut zur Preßwalze 34 und wird von dieser mitgenommen. Sowohl durch das Abknicken des Bleches 35 wie auch durch das spiralförmige Einschnüren des Preßraumes im Bereich des Einzugsspaltes 15 wird der mit schraffierten Linien dargestellte Einzugskeil vergrößert, was eine einwandfreie Gutmitnahme gewährleistet. Die Erfindung ist nicht án das dargestellte Ausführungsbeispiel gebunden. So können beispielsweise die eingezogenen Preßwalzen 30 bis 32 gemeinsam als Baugruppe verschwenkbar gelagert sein, so daß deren Abstand zur Rotationsachse 16 veränderbar ist.

## Patentansprüche

1. Rundballenpresse zur Herstellung von Großballen aus landwirtschaftlichem Erntegut, deren aus zwei Preßraumhälften bestehender aufklappbarer Preßraum umfangsseitig durch Preß- und Förderwalzen (5-14, 30-32, 34) begrenzt sind, die in den den Preßraum stirnseitig begrenzenden Gehäusewänden antreibbar gelagert sind, wobei zwei benachbarte Preßwalzen (32, 34) einen sich über die Maschinenbreite erstreckenden Gutzuführspalt (15) freilassen und wobei Drehachsen von Preß- und Förderwalzen auf einem Kreis gelagert sind, dessen Zentrum die theoretische Rotationsachse des Preßraums ist, dadurch gekennzeichnet, daß die zum Preßraum hin gerichteten Mantelflächenbereiche der — in Ballendrehrichtung (A) gesehen — vor dem Gutzuführspalt (15) gelegenen Preßwalzen (30 bis 32) einen geringeren Abstand zur theoretischen Rotationsachse (16) des Preßraums aufweisen als die Mantelflächen der übrigen Förderelemente (5 bis 12 und 34).

2. Rundballenpresse nach Anspruch 1, dadurch gekennzeichnet, daß die in Ballendrehrichtung (A) gesehen vor dem Gutzuführspalt (15) gelegenen Preßwalzen (30 bis 32) in Bezug auf die theoretische Rotationsachse (16) des Preßraums zunehmend nach innen versetzt sind.

3. Rundballenpresse nach Anspruch 1 oder 2, dadurch gekennzeichnet, daß die Mittelachsen der mit zunehmend geringerem Abstand zur Rotationsachse (16) des Preßraums angeordneten Preßwalzen (30 bis 32) auf einem gemeinsamen Kreisbogen (17) liegen.

4. Rundballenpresse nach den Ansprüche 1 bis 3, dadurch gekennzeichnet, daß wenigstens die in Ballendrehrichtung (A) gesehen erste Preßwalze (34) gegenüber der verlängerten theoretischen Preßraumbegrenzungsfläche, welche die innere Umhüllende der auf einem Kreis gelagerten Preßwalzen (5 bis 13) bildet, nach außen verlagert ist.

5. Rundballenpresse nach den Ansprüchen 1 bis 4 mit dem Guteinführspalt vorgeordnete gesteuerte Förderzinken und einem mit Durchtrittsschlitzen für diè Förderzinken versehenen Überleitblech, dadurch gekennzeichnet, daß das Überleitblech (35) mit seinem der ersten Preßwalze (34) zugewandten Ende nach unten abgeknickt und bis nahe an diese Preßwalze (34) herangeführt ist.

## Claims

1. Round-bale press for producing large bales of agricultural harvested material, of which the swing-open press space consisting of two press-space halves is limited circumferentially by press and transport rollers (5-14, 30-32, 34) which are mounted driveably in the housing walls limiting the press space on the end faces, two adjacent press rollers (32, 34) leaving free a material feed gap (15) extending over the width of the machine, and rotary axles of press and transport rollers being mounted on a circle, the centre of which is the theoretical axis of rotation of the press space, characterized in that the outer-surface regions, directed towards the press space, of the press rollers (30 to 32) located in front of the material feed gap (15), as seen in the direction of rotation (A) of the bale, are at a shorter distance from the theoretical axis of rotation (16) of the press space than the outer surfaces of the remaining transport elements (5 to 12 and 34).

2. Round-bale press according to Claim 1, characterized in that the press rollers (30 to 32) located in front of the material feed gap (15), as seen in the direction of rotation (A) of the bale, are offset increasingly inwards in relation to the theoretical axis of rotation (16) of the press space.

3. Round-bale press according to Claim 1 or 2, characterized in that the centre axes of the press rollers (30 to 32) arranged at an increasingly short distance from the axis of rotation (16) of the press space lie on a common arc of a circle (17).

4. Round-bale press according to Claims 1 to 3, characterized in that at least the first press roller (34), as seen in the direction of rotation (A) of the bale, is shifted outwards in relation to the extended theoretical press-space limiting surface which forms the inner envelope of the press rollers (5 to 13) mounted on a circle.

5. Round-bale press according to Claims 1 to 4, with controlled transport prongs located in front of the material feed gap and with a bridging plate provided with passage slits for the transport prongs, characterized in that the bridging plate (35) is bent downwards at its end facing the first press roller (34) and is brought close up to this press roller (34).

## Revendications

1. Presse pour la réalisation de balles cylindriques de grandes dimensions à partir de produits de récoltes agricoles comprenant une chambre de compactage constituée de deux parties pivotantes ouvrables et dont la périphérie est délimitée par des rouleaux de serrage et d'entraînement (5 à 14, 30 à 32, 34) qui sont montés rotatifs et commandés dans des parois de boîtier délimitant frontalement la chambre de compactage, deux rouleaux de serrage voisins (32, 34) délimitant une fente d'alimentation de produit à compacter (15) s'étendant sur toute la largeur de la presse et les axes de rotation des rouleaux de serrage et d'entraînement étant disposés sur un cercle dont le centre est constitué par l'axe de rotation théorique de la chambre de compactage, caractérisé en ce que la distance entre les surfaces d'enveloppe situées en regard de la chambre de compactage des rouleaux de serrage (30 à 32) situés, vue dans le sens de rotation (A) de la balle en amont de la fente d'alimentation (15) du produit à compacter, et l'axe de rotation théorique (16) de la chambre de compactage est plus petite que la distance correspondante des surfaces d'enveloppe des autres éléments d'entraînement (5 à 12 et 34).

2. Presse à balles cylindriques suivant la revendication 1, caractérisée en ce que les rouleaux de serrage (30 à 32) situés, vue dans le sens de rotation (A) de la balle en amont de la fente d'alimentation (15) sont décalés vers l'intérieur par rapport à l'axe de rotation théorique (16) de la chambre de compactage.

3. Presse à balles cylindriques suivant l'une quelconque des revendications 1 ou 2, caractérisée en ce que les axes des rouleaux de serrage (30 à 32) disposés progressivement plus proches de l'axe de rotation (16) de la chambre de compactage sont disposés sur un arc de cercle commun.

4. Presse à balles cylindriques suivant les revendications 1 à 3, caractérisée en ce qu'au moins le premier rouleau de serrage (34), vue dans le sens de rotation (A) de la balle, est décalé vers l'extérieur par rapport au prolongement de l'enveloppe théorique délimitant la chambre de compactage, qui forme l'enveloppe intérieure des rouleaux de serrage (5 à 13) disposés sur un cercle.

5. Presse à balles cylindriques suivant les revendications 1 à 4 comprenant en amont de la fente d'alimentation des griffes d'entraînement commandées et une tôle de guidage présentant des fentes pour le passage des griffes d'entraînement, caractérisée en ce que l'extrémité située au voisinage du premier rouleau de serrage (34), de la tôle de guidage (35) est coudée vers le bas et s'étend jusqu'au voisinage de ce rouleau de serrage (34).